# EUROPEAN PATENT APPLICATION

(11) **EP 3 626 377 A1**
(43) Date of publication of application: **25.03.2020**
(21) Application number: 18802757.7
(22) Date of filing: 01.03.2018
(51) Int. Cl.: B23H 7/08

(54) **ELECTRODE WIRE FOR WIRE-DISCHARGE MACHINING**

(30) Priority: 16.05.2017 JP 2017097092
(71) Applicant: SUMITOMO ELECTRIC INDUSTRIES, LTD., Osaka-shi, Osaka 541-0041 (JP)
(72) Inventor: NATSUMEDA Yoshiki, Chuo-ku, Osaka-shi Osaka 5410041 (JP); IWAMOTO Katsutoshi, Chuo-ku, Osaka-shi Osaka 5410041 (JP)
(74) Representative: Boult Wade Tennant LLP
(86) International application number: PCT/JP2018/007678
(87) International publication number: WO 2018/211772

(57) **Abstract**

An electrode wire for wire electrical discharge machining includes a core wire portion consisting of a steel and a coating layer covering an outer circumferential side of the core wire portion and consisting of a copper-zinc alloy. The coating layer is disposed so as to include a surface of the electrode wire for wire electrical discharge machining. The coating layer consists of a γ single phase. The coating layer has a surface roughness Ra of 0.08 µm or less in a circumferential direction. The coating layer has a surface roughness Ra of 0.08 µm or less in a longitudinal direction.

## Description

### Technical Field

The present invention relates to electrode wires for wire electrical discharge machining.

The present application claims priority to Japanese Patent Application No. 2017-097092, filed on May 16, 2017, the entire contents of which are incorporated herein by reference.

### Background Art

In wire electrical discharge machining, a voltage is applied between a workpiece immersed in liquid and an electrode wire so that heat generated by discharge melts the workpiece, thereby machining the workpiece. There are known electrode wires for use in wire electrical discharge machining (electrode wires for wire electrical discharge machining) that include a core wire portion consisting of a steel and a coating layer formed on the surface thereof and consisting of a copper-zinc alloy (Cu-Zn alloy) (see, for example, PTL 1).

### Citation List

### Patent Literature

PTL 1: Japanese Unexamined Patent Application Publication No. 2015-71221

### Summary of Invention

An electrode wire for wire electrical discharge machining according to the present disclosure includes a core wire portion consisting of a steel and a coating layer covering an outer circumferential side of the core wire portion and consisting of a copper-zinc alloy. The coating layer is disposed so as to include a surface of the electrode wire for wire electrical discharge machining. The coating layer consists of a γ single phase. The coating layer has a surface roughness Ra of 0.08 µm or less in a circumferential direction. The coating layer has a surface roughness Ra of 0.08 µm or less in a longitudinal direction.

### Brief Description of Drawings

[Fig. 1] Figure 1 is a schematic illustration showing the structure of an electrode wire.
[Fig. 2] Figure 2 is a schematic sectional view showing a cross-section, parallel to the longitudinal direction, of the region near the surface of the electrode wire.
[Fig. 3] Figure 3 is a schematic sectional view showing a cross-section, perpendicular to the longitudinal direction, of the region near the surface of the electrode wire.
[Fig. 4] Figure 4 is a flowchart outlining a method for manufacturing the electrode wire.
[Fig. 5] Figure 5 is a schematic sectional view showing a cross-section of a raw steel wire perpendicular to the longitudinal direction.
[Fig. 6] Figure 6 is a schematic sectional view illustrating a drawing step, a Cu-layer forming step, and a Zn-layer forming step.
[Fig. 7] Figure 7 is a schematic sectional view illustrating a first heat treatment step.
[Fig. 8] Figure 8 is a schematic illustration showing the profile of a cross-section perpendicular to the longitudinal direction upon completion of the first heat treatment step.
[Fig. 9] Figure 9 is a schematic illustration showing the profile of a cross-section perpendicular to the longitudinal direction after a smoothing drawing step at a reduction of area of 1%.
[Fig. 10] Figure 10 is a schematic illustration showing the profile of a cross-section perpendicular to the longitudinal direction after a smoothing drawing step at a reduction of area of 4%.
[Fig. 11] Figure 11 is a graph showing the relationship between the reduction of area and conductivity.

### Description of Embodiments

### [Problems to be Solved by Present Disclosure]

In wire electrical discharge machining, there is a need for high-speed machining from the viewpoint of improved productivity. In wire electrical discharge machining, there is also a need for improved dimensional accuracy of components fabricated by machining, that is, improved machining accuracy. Accordingly, an object is to provide an electrode wire for wire electrical discharge machining that allows for both high-speed machining and high machining accuracy.

### [Advantageous Effects of Present Disclosure]

The above electrode wire for wire electrical discharge machining can serve as an electrode wire for wire electrical discharge machining that allows for both high-speed machining and high machining accuracy.

### [Description of Embodiments of Present Invention]

First, the embodiments of the present invention listed below will be described. An electrode wire for wire electrical discharge machining according to the present application includes a core wire portion consisting of a steel and a coating layer covering an outer circumferential side of the core wire portion and consisting of a copper-zinc alloy. The coating layer is disposed so as to include a surface of the electrode wire for wire electrical discharge machining. The coating layer consists of a γ single phase.

The coating layer has a surface roughness Ra of 0.08 µm or less in a circumferential direction. The coating layer has a surface roughness Ra of 0.08 µm or less in a longitudinal direction.

The coating layer of the electrode wire for wire electrical discharge machining according to the present application consists of a γ-single-phase copper-zinc alloy. This allows for high-speed machining. However, according to research conducted by the inventors, a coating layer consisting of a γ-single-phase copper-zinc alloy may have a large roughness in the circumferential direction and may thus decrease the machining accuracy. Because the coating layer of the electrode wire for wire electrical discharge machining according to the present application has a surface roughness Ra of 0.08 µm or less in the circumferential direction, the decrease in machining accuracy is reduced.

In addition, according to research conducted by the inventors, a coating layer consisting of a γ-single-phase copper-zinc alloy tends to exhibit cracks extending in the circumferential direction. These cracks may increase the roughness in the longitudinal direction and may also decrease the conductivity. In addition, a coating layer consisting of a γ-single-phase copper-zinc alloy may have a large roughness in the longitudinal direction as well as the circumferential direction and may thus decrease the machining accuracy. Because the coating layer of the electrode wire for wire electrical discharge machining according to the present application has a surface roughness Ra of 0.08 µm or less in the longitudinal direction, the decrease in conductivity is reduced, and the decrease in machining accuracy is also reduced.

Thus, the electrode wire for wire electrical discharge machining according to the present application allows for both high-speed machining and high machining accuracy.

In the electrode wire for wire electrical discharge machining, the coating layer may have a surface roughness Rz of 0.50 µm or less in the longitudinal direction. This further reduces the decrease in conductivity and also further reduces the decrease in machining accuracy.

In the electrode wire for wire electrical discharge machining, crystal grains in a surface region that is a region including a surface of the coating layer may have a shape that is longer in the longitudinal direction than in a radial direction of the electrode wire for wire electrical discharge machining. This reduces the surface roughness in the circumferential direction of the electrode wire. In addition, cracks extending in the circumferential direction of the electrode wire are inhibited, thus reducing the surface roughness in the longitudinal direction and also making it easier to ensure sufficient conductivity.

In the electrode wire for wire electrical discharge machining, the ratio of the length in the longitudinal direction to the length in the radial direction of the crystal grains in the surface region may be larger than the ratio of the length in the longitudinal direction to the length in the radial direction of crystal grains in an inner region located on an inner circumferential side of the surface region. This reduces the surface roughness in the circumferential direction of the electrode wire. In addition, cracks extending in the circumferential direction of the electrode wire are inhibited, thus reducing the surface roughness in the longitudinal direction and also making it easier to ensure sufficient conductivity.

In the electrode wire for wire electrical discharge machining, an outer circumference of a cross-section perpendicular to the longitudinal direction may have a circularity of 0.25 µm or less. This can further improve the machining accuracy.

In the electrode wire for wire electrical discharge machining, the surface of the electrode wire for wire electrical discharge machining may contain 10 or less cracks over a length of 100 µm in the longitudinal direction of the electrode wire for wire electrical discharge machining. This makes it easier to ensure sufficient conductivity.

The electrode wire for wire electrical discharge machining may have a conductivity of 8% IACS (International Annealed Copper Standard) or more and 20% IACS or less. This allows the electrode wire for wire electrical discharge machining to have appropriate conductivity.

The electrode wire for wire electrical discharge machining may have a surface hardness of 300 HV or more and 600 HV or less. This allows the coating layer to have sufficient strength.

The surface hardness can be measured, for example, with a hardness tester (DUH-211) available from Shimadzu Corporation.

In the electrode wire for wire electrical discharge machining, the copper-zinc alloy forming the coating layer may have a zinc content of 60% by mass or more and 75% by mass or less. This makes it easier to obtain a coating layer consisting of a γ-single-phase copper-zinc alloy.

### [Details of Embodiments of Present Invention]

Next, an embodiment of an electrode wire for wire electrical discharge machining according to the present invention will hereinafter be described with reference to the drawings. In the following drawings, the same or corresponding parts are denoted by the same reference numerals, and a description thereof is not repeated.

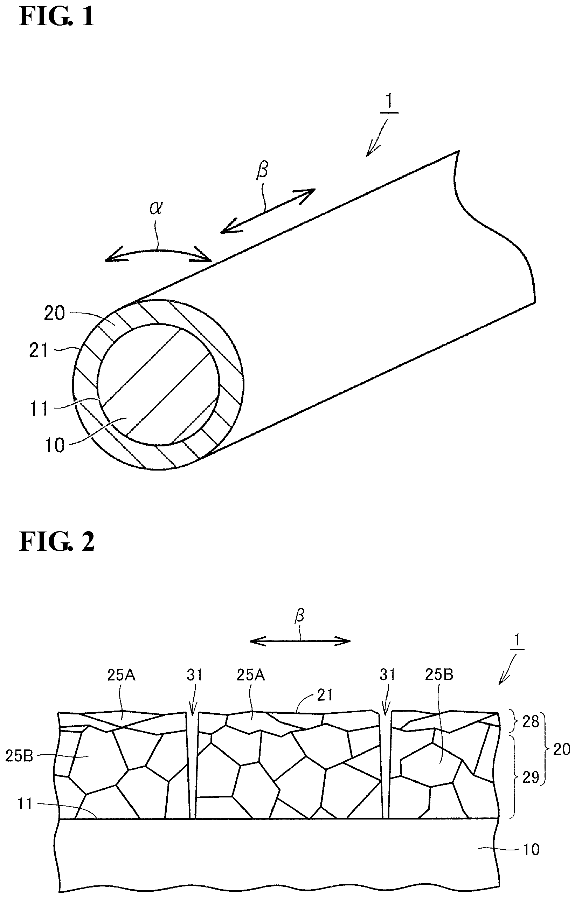

Referring to Fig. 1, an electrode wire 1 serving as an electrode wire for wire electrical discharge machining according to this embodiment includes a core wire portion 10 consisting of a steel and a coating layer 20 covering the outer circumferential side of the core wire portion 10 and consisting of a copper-zinc alloy. The coating layer 20 is disposed so as to include a surface 21 of the electrode wire 1.

The steel that forms the core wire portion 10 contains, for example, 0.6% by mass or more and 1.1% by mass or less carbon. The steel that forms the core wire portion 10 may be, for example, a piano wire material specified in JIS Standard G 3502. The steel that forms the core wire portion 10 has a uniform pearlite structure over the entire region thereof.

The copper-zinc alloy that forms the coating layer 20 contains, for example, 60% by mass or more and 75% by mass or less zinc. The coating layer 20 consists of a γ single phase. That is, the copper-zinc alloy that forms the coating layer 20 consists of a γ single phase. The copper-zinc alloy that forms the coating layer 20 may contain, as additive elements, one or more elements selected from the group consisting of silver (Ag), gold (Au), aluminum (Al), cadmium (Cd), and mercury (Hg). The coating layer 20 has a thickness of, for example, 1 µm or more and 8 µm or less.

The coating layer 20 has a surface roughness Ra of 0.08 µm or less in the circumferential direction (in the direction of arrow α). The coating layer 20 has a surface roughness Ra of 0.08 µm or less in the longitudinal direction (in the direction of arrow β).

The coating layer 20 of the electrode wire 1 according to this embodiment consists of a γ-single-phase copper-zinc alloy. This allows for high-speed machining. In addition, because the coating layer 20 has a surface roughness Ra of 0.08 µm or less in the circumferential direction, the decrease in machining accuracy is reduced. Furthermore, because the coating layer 20 has a surface roughness Ra of 0.08 µm or less in the longitudinal direction, the decrease in conductivity is reduced, and the decrease in machining accuracy is also reduced. As a result, the electrode wire 1 serves as an electrode wire for wire electrical discharge machining that allows for both high-speed machining and high machining accuracy.

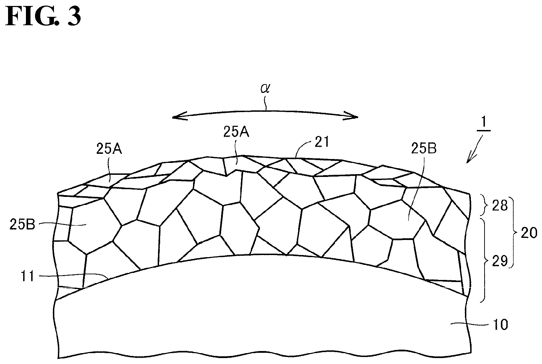

Figure 2 shows the condition of the metal structure (microstructure) of the region (coating layer 20) near the surface of the electrode wire 1 in a cross-section parallel to the longitudinal direction of the electrode wire 1 (the direction of arrow β in Fig. 1). Figure 3 shows the condition of the metal structure (microstructure) of the region (coating layer 20) near the surface of the electrode wire 1 in a cross-section perpendicular to the longitudinal direction of the electrode wire 1 (the direction of arrow β in Fig. 1).

Referring to Figs. 2 and 3, the coating layer 20, which covers the core wire portion 10 so as to be in contact with a surface 11 of the core wire portion 10, includes a surface region 28 that is a region including the surface 21 and an inner region 29 that is a region located on the inner circumferential side of the surface region 28 and in contact with the surface 11 of the core wire portion 10. The surface region 28 and the inner region 29 each have a polycrystalline structure containing a plurality of (a large number of) crystal grains 25A or 25B.

Referring to Fig. 2, the crystal grains 25A in the surface region 28 have a shape that is longer in the longitudinal direction (in the direction of arrow β) than in the radial direction of the electrode wire 1. The ratio of the length in the longitudinal direction to the length in the radial direction of the crystal grains 25A in the surface region 28 is larger than the ratio of the length in the longitudinal direction to the length in the radial direction of the crystal grains 25B in the inner region 29. Such a metal structure reduces the surface roughness in the circumferential direction of the electrode wire 1 according to this embodiment. In addition, cracks 31 extending in the circumferential direction are inhibited, thus reducing the surface roughness in the longitudinal direction and also making it possible to ensure sufficient conductivity. Specifically, the surface 21 of the electrode wire 1 contains 10 or less cracks 31 over a length of 100 µm in the longitudinal direction of the electrode wire 1.

The number of cracks 31 can be examined, for example, by cutting the electrode wire 1 in a cross-section parallel to the longitudinal direction and observing the cut cross-section under a microscope. The number of cracks 31 over a length of 100 µm in the longitudinal direction of the electrode wire 1 can be determined by observing a plurality of areas, for example, five areas, each having a length of 100 µm in the longitudinal direction, and calculating the average of the five areas. The surface 21 of the electrode wire 1 preferably contains 5 or less cracks 31 over a length of 100 µm in the longitudinal direction of the electrode wire 1, more preferably 0 crack 31, that is, no crack 31 found when, for example, five areas are observed.

The coating layer 20 of the electrode wire 1 according to this embodiment preferably has a surface roughness Ra of 0.06 µm or less, more preferably 0.04 µm or less, in the circumferential direction. This further improves the machining accuracy.

In addition, the coating layer 20 of the electrode wire 1 according to this embodiment preferably has a surface roughness Rz of 0.50 µm or less, more preferably 0.30 µm or less, even more preferably 0.20 µm or less, in the longitudinal direction. In addition, the coating layer 20 of the electrode wire 1 according to this embodiment preferably has a surface roughness Ra of 0.06 µm or less, more preferably 0.04 µm or less, in the longitudinal direction. This further reduces the decrease in conductivity and also further reduces the decrease in machining accuracy.

The surface roughness Ra and the surface roughness Rz refer to those specified in JIS Standard B 0601. In the present application, the surface roughness in the circumferential direction is measured over a sampling length equal to the length of one turn in the circumferential direction (the length of the outer circumference) of the electrode wire for wire electrical discharge machining.

In addition, the circularity of the outer circumference of a cross-section perpendicular to the longitudinal direction (the circularity of the surface 21 of the coating layer 20) of the electrode wire 1 according to this embodiment is preferably 0.25 µm or less. This can further improve the machining accuracy. More preferably, the circularity is 0.15 µm or less, even more preferably 0.10 µm or less. The circularity refers to the difference between the radii of the circles inscribed in and circumscribed about the profile of the surface 21 in a cross-section perpendicular to the longitudinal direction of the electrode wire 1.

In addition, the electrode wire 1 according to this embodiment preferably has a conductivity of 8% IACS or more and 20% IACS or less. This allows the electrode wire 1 to have appropriate conductivity. More preferably, the electrode wire 1 has a conductivity of 9% IACS or more.

In addition, the surface hardness (the hardness of the surface 21 of the coating layer 20) of the electrode wire 1 according to this embodiment is preferably 300 HV or more and 600 HV or less. This allows the coating layer 20 to have sufficient strength. More preferably, the electrode wire 1 has a surface hardness of 400 HV or more. More preferably, the electrode wire 1 has a surface hardness of 500 HV or less.

The electrode wire 1 preferably has a tensile strength of 1,800 MPa or more and 3,200 MPa or less. This inhibits breaking during wire electrical discharge machining. More preferably, the electrode wire 1 has a tensile strength of 2,000 MPa or more and 3,000 MPa or less.

The electrode wire 1 preferably has a wire diameter of 20 µm or more and 200 µm or less. A wire diameter of 20 µm or more makes it easier to ensure sufficient strength. A wire diameter of 200 µm or less makes it easier to perform precise machining.

The area fraction of the coating layer 20 in a cross-section perpendicular to the longitudinal direction of the electrode wire 1 is preferably 10% or more and 45% or less. This makes it easier to achieve the desired conductivity and discharge performance while ensuring sufficient tensile strength.

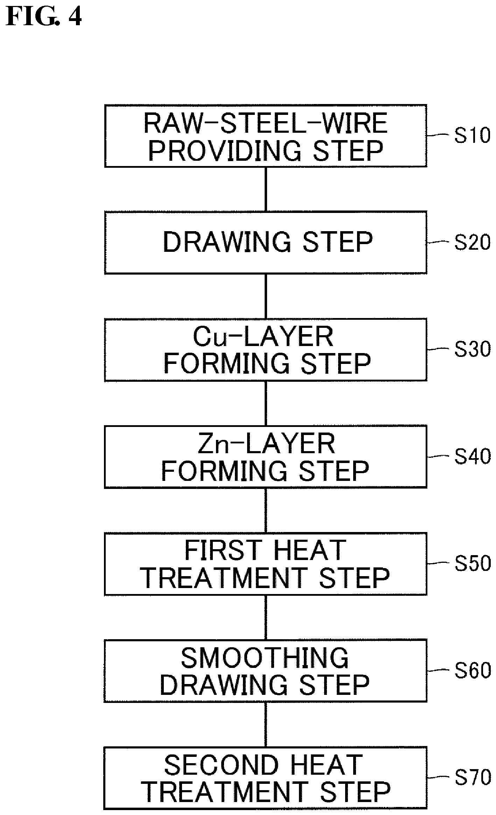

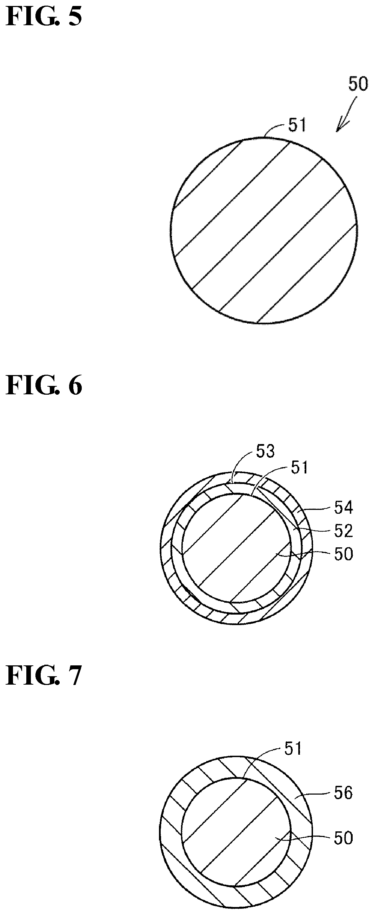

Next, an example method for manufacturing the electrode wire 1 according to this embodiment will be described. Referring to Fig. 4, in the method for manufacturing the electrode wire 1 according to this embodiment, a raw-steel-wire providing step is first performed as step (S10). In step (S10), for example, a steel wire consisting of a piano wire material specified in JIS Standard G 3502 is provided. Specifically, referring to Fig. 5, a raw steel wire 50 having an appropriate wire diameter is provided by taking into account the desired wire diameter of the electrode wire 1. The raw steel wire 50 has a circular cross-section perpendicular to the longitudinal direction. The raw steel wire 50 is provided, for example, by a process including a rolling step and a drawing step.

A drawing step is then performed as step (S20). In step (S20), the raw steel wire 50 provided in step (S10) is subjected to drawing. Thus, the wire diameter of the raw steel wire 50 is adjusted so that the desired wire diameter of the core wire portion 10 of the electrode wire 1 is achieved after step (S60), described later. This raw steel wire 50 may be subjected to patenting treatment. The patenting treatment can be performed by heating the raw steel wire 50 to a temperature range of the austenitizing temperature (A₁ point temperature) or higher, quenching the raw steel wire 50 to a temperature range higher than the martensitic transformation start temperature (Mₛ point temperature), and holding the raw steel wire 50 within that temperature range. This transforms the steel structure of the raw steel wire 50 into a fine pearlite structure with a small lamellar spacing.

A Cu-layer forming step is then performed as step (S30). In step (S30), a copper layer (Cu layer) is formed on the surface of the raw steel wire 50 subjected to step (S20). Specifically, referring to Fig. 6, a copper layer 52 is formed so as to cover a surface 51 of the raw steel wire 50.

The copper layer 52 can be formed, for example, by plating.

A Zn-layer forming step is then performed as step (S40). In step (S40), a zinc layer (Zn layer) is formed on the surface of the raw steel wire 50 subjected to step (S30). Specifically, referring to Fig. 6, a zinc layer 54 is formed so as to cover a surface 53 of the copper layer 52 formed on the surface 51 of the raw steel wire 50. The zinc layer 54 can be formed, for example, by plating.

The thicknesses of the copper layer 52 and the zinc layer 54 formed in steps (S30) and (S40) can be determined by taking into account the desired constituent composition of the copper-zinc alloy that forms the coating layer 20. In addition, the order in which the copper layer 52 and the zinc layer 54 are formed is not limited to the above order; instead, the copper layer 52 may be formed after the zinc layer 54 is formed.

A first heat treatment step is then performed as step (S50). In step (S50), the copper layer 52 and the zinc layer 54 formed in steps (S30) and (S40) are subjected to alloying treatment. Specifically, the raw steel wire 50 having the copper layer 52 and the zinc layer 54 is subjected to heat treatment, for example, by heating the raw steel wire 50 to a temperature range of 200°C or higher and 500°C or lower and holding the raw steel wire 50 for 1 hour or more and 6 hours or less. Thus, referring to Figs. 6 and 7, the copper layer 52 and the zinc layer 54 are alloyed to obtain a coating layer 56 composed of a copper-zinc alloy consisting of a γ single phase.

A smoothing drawing step is then performed as step (S60). In step (S60), the raw steel wire 50 having the coating layer 56 formed so as to cover the surface 51 thereof is subjected to drawing for surface smoothing (smoothing drawing). Specifically, the raw steel wire 50 having the coating layer 56 formed thereon is subjected to drawing at a low reduction of area, i.e., a reduction of area of 1% or more and 5% or less.

A second heat treatment step is then performed as step (S70). In step (S70), the coating layer 56 subjected to drawing in step (S60) is subjected to heat treatment, for example, by heating the coating layer 56 to a temperature of 200°C or higher and 500°C or lower and holding the coating layer 56 for 1 hour or more and 6 hours or less. Thus, the electrode wire 1 including the core wire portion 10 and the coating layer 20 covering the surface 11 of the core wire portion 10 is obtained. The raw steel wire 50 and the coating layer 56 correspond to the core wire portion 10 and the coating layer 20, respectively, of the electrode wire 1.

Here, the heat treatment in step (S50) of the method for manufacturing the electrode wire 1 according to this embodiment forms a coating layer 56 (coating layer 20) consisting of a γ single phase. The formation of a coating layer 56 (coating layer 20) consisting of a γ single phase leaves large irregularities on the surface 21 of the electrode wire 1, which would cause the problem of decreased machining accuracy if no measure were taken.

Accordingly, in this embodiment, the smoothing drawing step is performed in step (S60). This causes the crystal grains 25A in the surface region 28 to be compressed in the radial direction and stretched in the longitudinal direction of the electrode wire 1, thus achieving smoothing. If the reduction of area after drawing exceeds 5%, a large number of cracks 31 extending the circumferential direction form since the γ phase is brittle. As a result, although the surface roughness in the circumferential direction decreases, the surface roughness in the longitudinal direction increases due to the influence of the cracks 31, and the conductivity also decreases. If the reduction of area is 5% or less, the surface roughness of the surface 21 can be reduced while the formation of the cracks 31 is inhibited. If the reduction of area is 1% or more, the contact between the coating layer 56 (coating layer 20) and the die is more reliably ensured over the entire circumference during drawing, so that the surface roughness in the circumferential direction can be more reliably reduced.

Furthermore, in this embodiment, the second heat treatment step is performed as step (S70). Although step (S70) is optional, this step, if the cracks 31 are formed in step (S60), repairs some or all of the cracks 31 by atomic diffusion, thus further reducing the cracks 31.

Thus, the method for manufacturing the electrode wire 1 according to this embodiment can be used to manufacture an electrode wire 1 that allows for both high-speed machining and high machining accuracy. Although the drawing step in the embodiment described above is performed as step (S20) before the Cu-layer forming step and the Zn-layer forming step, the drawing step may be performed after the Cu-layer forming step and the Zn-layer forming step and before the first heat treatment step. Examples

Experiments were carried out to demonstrate the effect of the smoothing drawing step in the above embodiment. Specifically, in the method for manufacturing the electrode wire 1 according to the above embodiment, a sample subjected to steps (S10) to (S50) was provided (Sample A). Sample A was subjected to a smoothing drawing step at a reduction of area of 1% to prepare a sample (Sample B) and to a smoothing drawing step at a reduction of area of 4% to prepare a sample (Sample C). In one experiment, Samples A to C were cut in a cross-section perpendicular to the longitudinal direction, and the profile of the cut cross-section was examined. In another experiment, Sample A was subjected to a smoothing drawing step at various reductions of area, and the conductivity of the resulting electrode wires was measured.

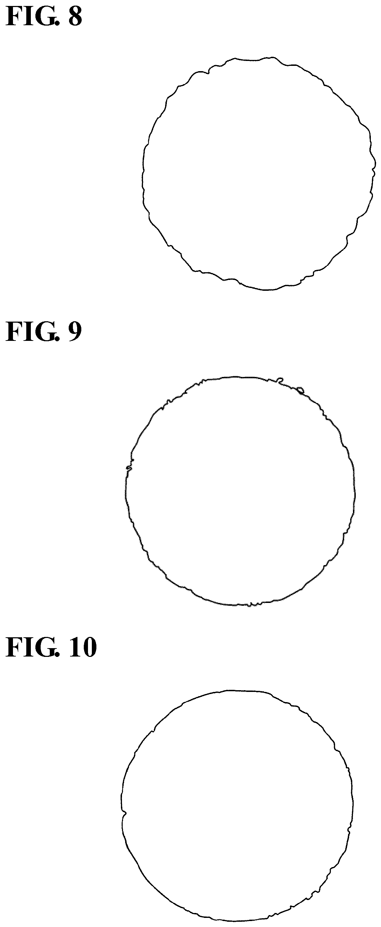

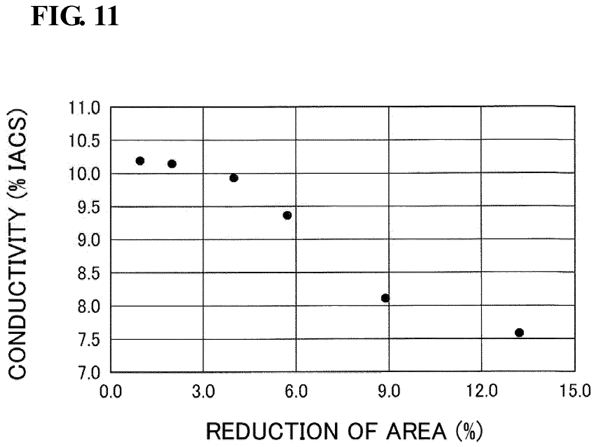

Figures 8, 9, and 10 are schematic views showing the profiles of Samples A, B, and C, respectively. Figure 11 is a graph showing the relationship between the reduction of area in the smoothing drawing step and the conductivity of the resulting electrode wires.

Referring to Figs. 8 and 9, the smoothing drawing step at a reduction of area of 1% improves irregularities in the circumferential direction. Furthermore, referring to Figs. 9 and 10, the smoothing drawing step at a reduction of area of 4% further improves irregularities in the circumferential direction. Thus, even drawing at a small reduction of area, i.e., a reduction of area of 5% or less, can effectively improve irregularities in the circumferential direction.

Referring to Fig. 11, the experimental results demonstrate that the conductivity decreases with increasing reduction of area in the smoothing drawing step. This is probably because drawing at a larger reduction of area formed a larger number of cracks 31 in the coating layer 20. The experimental results also show that a reduction of area of 5% or less in the smoothing drawing step inhibits the formation of the cracks 31 and thus ensures sufficient conductivity for practical use.

The above experimental results demonstrate that an electrode wire for wire electrical discharge machining that allows for both high-speed machining and high machining accuracy can be manufactured by using a coating layer consisting of a γ single phase and performing a smoothing drawing step at a reduction of area of 5% or less.

Although the coating layer 20 is formed in contact with the surface of the core wire portion 10 in the embodiment and examples described above, the electrode wire for wire electrical discharge machining according to the present application is not limited thereto. For example, a copper layer consisting of pure copper may be disposed between the coating layer 20 and the core wire portion 10 to improve the conductivity. In addition, a blocking layer for blocking the diffusion of zinc, for example, a nickel (Ni) layer, may be disposed between the copper layer and the coating layer 20.

It should be understood that the embodiments and examples disclosed herein are illustrative in all respects and not restrictive in any way. The scope of the present invention is defined by the claims, rather than by the foregoing description, and all changes that come within the meaning and range of equivalency of the claims are intended to be embraced therein.

### Reference Signs List

- 1: electrode wire
- 10: core wire portion
- 11: surface
- 20: coating layer
- 21: surface
- 25A, 25B: crystal grain
- 28: surface region
- 29: inner region
- 31: crack
- 50: raw steel wire
- 51: surface
- 52: copper layer
- 53: surface
- 54: zinc layer
- 56: coating layer

## Claims

1. An electrode wire for wire electrical discharge machining, comprising:
a core wire portion consisting of a steel; and
a coating layer covering an outer circumferential side of the core wire portion and consisting of a copper-zinc alloy, the coating layer being disposed so as to include a surface of the electrode wire for wire electrical discharge machining,
wherein the coating layer consists of a γ single phase,
the coating layer has a surface roughness Ra of 0.08 µm or less in a circumferential direction, and
the coating layer has a surface roughness Ra of 0.08 µm or less in a longitudinal direction.

2. The electrode wire for wire electrical discharge machining according to Claim 1, wherein the coating layer has a surface roughness Rz of 0.50 µm or less in the longitudinal direction.

3. The electrode wire for wire electrical discharge machining according to Claim 1 or 2, wherein crystal grains in a surface region that is a region including a surface of the coating layer have a shape that is longer in the longitudinal direction than in a radial direction of the electrode wire for wire electrical discharge machining.

4. The electrode wire for wire electrical discharge machining according to Claim 3, wherein a ratio of a length in the longitudinal direction to a length in the radial direction of the crystal grains in the surface region is larger than a ratio of a length in the longitudinal direction to a length in the radial direction of crystal grains in an inner region located on an inner circumferential side of the surface region.

5. The electrode wire for wire electrical discharge machining according to any one of Claims 1 to 4, wherein an outer circumference of a cross-section perpendicular to the longitudinal direction has a circularity of 0.25 µm or less.

6. The electrode wire for wire electrical discharge machining according to any one of Claims 1 to 5, wherein the surface of the electrode wire for wire electrical discharge machining contains 10 or less cracks over a length of 100 µm in the longitudinal direction of the electrode wire for wire electrical discharge machining.

7. The electrode wire for wire electrical discharge machining according to any one of Claims 1 to 6, wherein the electrode wire for wire electrical discharge machining has a conductivity of 8% IACS or more and 20% IACS or less.

8. The electrode wire for wire electrical discharge machining according to any one of Claims 1 to 7, wherein the electrode wire for wire electrical discharge machining has a surface hardness of 300 HV or more and 600 HV or less.

9. The electrode wire for wire electrical discharge machining according to any one of Claims 1 to 8, wherein the copper-zinc alloy forming the coating layer has a zinc content of 60% by mass or more and 75% by mass or less.
